(19) Europäisches Patentamt
European Patent Office
Office européen des brevets

(11) Veröffentlichungsnummer : **0 101 556**
**B1**

(12) # EUROPÄISCHE PATENTSCHRIFT

(45) Veröffentlichungstag der Patentschrift : **04.03.87**

(51) Int. Cl.⁴ : **B 01 D 47/06**, B 01 D 50/00, G 21 F 9/02

(21) Anmeldenummer : **83106903.4**

(22) Anmeldetag : **14.07.83**

(54) **Vorrichtung zur Reinigung radioaktiver Abgase.**

(30) Priorität : **14.08.82 DE 3230375**

(43) Veröffentlichungstag der Anmeldung : **29.02.84 Patentblatt 84/09**

(45) Bekanntmachung des Hinweises auf die Patenterteilung : **04.03.87 Patentblatt 87/10**

(84) Benannte Vertragsstaaten : **BE DE GB SE**

(56) Entgegenhaltungen :
**CA-A- 947 197**
**DE-A- 2 731 755**

(73) Patentinhaber : **Nukem GmbH**
**Rodenbacher Chaussee 6 Postfach 11 00 80**
**D-6450 Hanau 11 (DE)**

(72) Erfinder : **Vietzke, Horst, Dr., Dipl.-Chem.**
**Burgstrasse 19**
**D-6457 Maintal 4 (DE)**
Erfinder : **Brähler, Georg, Dr., Dipl.-Chem.**
**Barborossastrasse 15**
**D-6463 Freigericht 1 (DE)**
Erfinder : **Hofmann, Jürgen, Dr., Dipl.-Chem.**
**Salzkörner Weg 12**
**D-6482 Bad Orb (DE)**

(74) Vertreter : **Nowak, Gerhard**
**DEGUSSA AG Fachbereich Patente Rodenbacher Chaussee Postfach 1345**
**D-6450 Hanau 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 101 556 B1

**Beschreibung**

Die Erfindung betrifft eine Vorrichtung zur Reinigung feuchter, mit Staub und Aerosolen beladener, radioaktiver Abgase, im wesentlichen bestehend aus einem Waschturm mit einem Fasertiefbettfilter.

In der Nuklearindustrie bereiten staubhaltige, feuchte und mit Aerosolen beladene Abgase besondere Schwierigkeit bei der Abgasreinigung zur Einhaltung der Strahlenschutzbestimmungen. Die üblichen Waschkolonnen mit Füllkörpern zeigen unzureichende Dekontaminationsleistungen. Bisher mußte man anschließend das Abgas durch Erhitzen trocknen und über Vorfilter und Feinstfilter reinigen. Die Standzeit der Trockenfilter ist bei dieser Methode relativ kurz, weil der entstehende Feinstaub die Filter schnell zusetzt. In ähnlicher Weise konnten bisher Fasertiefbettfilter, die einen sehr hohen Abscheidegrad für Flüssigaerosole haben, nicht eingesetzt werden, weil sie sich in staubhaltiger Luft sehr schnell zusetzen. Die Abgasströme enthalten neben Aerosolen oft auch wasserlösliche Schwebstoffe, wie Ammoniumkarbonat- und Ammoniumnitratnebel.

In der DE-A-27 31 755 und der CA-A-947 197 werden Vorrichtungen zur Reinigung von Prozeßgasströmen beschrieben, die mit Tiefbettfiltern und zyklonartiger Gasführung arbeiten. Für die spezielle Reinigung von feuchten, mit Staub und Aerosolen beladenen, radioaktiven Abgasen sind diese Vorrichtungen allerdings nicht ausreichend geeignet.

Es war daher Aufgabe der vorliegenden Erfindung, eine Vorrichtung zur Reinigung feuchter, mit Staub und Aerosolen beladener, radioaktiver Abgase zu schaffen, bestehend aus einem Waschturm mit einem Fasertiefbettfilter, die radioaktive Stäube und Aerosole so gut abscheidet, daß ein nachgeschalteter Feinstfilter eine normal übliche Standzeit von mindestens 6 Monaten erreicht.

Diese Aufgabe wurde erfindungsgemäß dadurch gelöst, daß die Abgaszuleitung zusammen mit einem Flüssigkeitssprühelement tangential an ein Mittelteil des Waschturms angesetzt ist, oberhalb des Mittelteils im Waschturm ein mit einem Flüssigkeitssprühelement ausgestatteter Fasertiefbettfilter mit einer Porenweite $> 3$ µm und anschließend ein Fasertiefbettfilter mit einer Porenweite $< 3$ µm angeordnet sind und unterhalb des Mittelteils ein Waschflüssigkeitssammelzylinder mit kritikalitätssicherer Geometrie sich befindet.

Im Waschturm werden mit dieser Anordnung drei abgestufte Reinigungsschritte hintereinander durchgeführt, wobei in der ersten Stufe relativ grober Staub durch Zyklonwirkung abgeschieden wird, in der zweiten Stufe eine Sprühnaßwaschung des Gases erfolgt und in der dritten Stufe die Feinaerosole eliminiert werden. Dadurch wird ein Höchstmaß an Reinigung der radioaktiven Abgase erreicht. Außerdem ist der Waschflüssigkeitssammelbehälter in kritikalitätssicherer Geometrie ausgelegt, so daß auch im Störfall beliebig hohe Spaltstoffkonzentrationen auftreten können, ohne einen Kritikalitätsunfall auszulösen. Das Mittelteil des Waschturms ist wie ein Naßzyklon gestaltet. Der Gaseintritt in den rohrförmigen Wäscher erfolgt tangential beispielsweise unter Wassereinsprühung. Grobe Staubpartikeln werden hier gegen die naße Wand geschleudert, benetzt und mit dem umlaufenden. Wasser in den Sammelzylinder gespült. Oberhalb des Mittelteils befindet sich ein grobes Glas- oder Kunststofffasertiefbettfilter mit einer Porenweite von größer 3 µm, das beispielsweise mit umgepumptem, über ein zwischengeschaltetes Filter gereinigtem Wasser besprüht wird. Hier werden Salznebel in Lösung gebracht und feinere Staubpartikeln benetzt und in den Sammelzylinder gespült. In der dritten Stufe befindet sich ein sehr feines Fasertiefbettfilter mit einer Porenweite von kleiner 3 µm. In ihm werden Aerosole mit hoher Abscheidewirkung zurückgehalten. Danach verlassen die gereinigten Abgase den Waschturm.

Die Abbildungen I und II zeigen schematisch eine beispielhafte Ausführungsform der erfindungsgemäßen Vorrichtung, wobei Abbildung II einen Querschnitt durch den Mittelteil des Waschturms wiedergibt. Die Vorrichtung besteht aus einem Waschturm (1) mit angeschlossenem Waschflüssigkeitssammelzylinder (2). Am Mittelteil (3) ist die Abgaszuleitung (13) tangential angebracht. Außerdem ist er mit einer Sprühdüse (11) versehen, die das eintretende Abgas befeuchtet. Oberhalb dieses Mittelteils (3) befindet sich in einem Segment (5) des Waschturms (1) ein Fasertiefbettfilter (4) mit einer Porenweite $> 3$ µm, wo das Abgas ebenfalls über eine Sprühdüse (12) mit einer Waschflüssigkeit, normalerweise Wasser, besprüht wird, die über die Pumpe (9) und dem Filter (10) dem Sammelzylinder (2) entnommen wird. Das noch aerosolbeladene Abgas gelangt dann in ein weiteres Segment (6) des Waschturms (1), in dem sich ein Fasertiefbettfilter (7) mit einer Porenweite $< 3$ µm befindet. Dort werden die Aerosole abgeschieden und fließen über eine Leitung (14) in den Sammelzylinder (2). Über die Leitung (8) wird das Abgas von einem Ventilator abgesaugt.

Folgende Beispiele sollen die Leistungsfähigkeit der erfindungsgemäßen Vorrichtung aufzeigen.

Beispiel 1

Die benutzte Abgasreinigungsvorrichtung hatte folgende Kenndaten :

Ansaugvolumen 1 900 $m^3/h$ Abgas
Bedüsung über die Sprühdüsen (11 und 12) 1,5 $m^3/h$ Umlaufwasser
Tiefbettfaserfilter (4) 0,22 $m^2$ Fasertiefbettfilter aus .Polytetrafluoräthylen

Tiefbettfaserfilter (7) 2,5 $m^2$ Polypropylenfasertiefbettfilter

Um einen Störfall zu simulieren, wurden 1,5 kg abgereichertes $UF_6$ (Uranhexafluorid) gasförmig in einem Zeitraum von 20 min. bei vollen Ansaugvolumen in die Vorrichtung geleitet. Dieses $UF_6$-Gas wurde zunächst mit Wasser umgesetzt, wobei sich Flußsäure und Uranylfluoridaerosole bildeten :

$$UF_6 + 2H_2O \longrightarrow UO_2F_2 + 4HF$$

Der Abscheidegrad in der Vorrichtung betrug 99,95 %, was einem Dekontaminationsfaktor bei diesem nur im Störfall auftretenden Abgas von $2 \times 10^3$ entspricht.

Beispiel 2

In der gleichen Vorrichtung wie in Beispiel 1 wurden 20 Minuten lang dem eintretenden Abgasstrom durch Eindüsen mit einer Zweistoffdüse Uranylnitrataerosole zugesetzt, indem einer Uranylnitratlösung ($UO_2(NO_3)_2$) mit 121,5 g U/l 40 l/h Preßluft eingeleitet, zu feinen Aerosolen verdüst und 20 min. lang dem Abgasstrom zugeführt wurden. Es wurden 99,999 3 % des Urans zurückgehalten, was einem Dekofaktor von $1,4 \times 10^5$ entspricht.

Die Tiefbettfilter bestehen vorzugsweise aus Glasfasern oder Kunststoffasern.

**Patentanspruch**

Vorrichtung zur Reinigung feuchter, mit Staub und Aerosolen beladener, radioaktiver Abgase, bestehend aus einem Waschturm mit einem Fasertiefbettfilter, dadurch gekennzeichnet, daß die Abgaszuleitung (13) zusammen mit einem Flüssigkeitssprühelement (11) tangential an ein Mittelteil (3) des Waschturms (1) angesetzt ist, oberhalb des Mittelteils (3) im Waschturm (1) ein mit einem Flüssigkeitssprühelement (12) ausgestatteter Fasertiefbettfilter (4) mit einer Porenweite von > 3 µm und anschließend ein Fasertiefbettfilter (7) mit einer Porenweite von < 3 µm angeordnet sind und unterhalb des Mittelteils (3) ein Waschflüssigkeitsammelzylinder (2) mit kritikalitätssicherer Geometrie sich befindet.

**Claim**

An apparatus for purifying moist radioactive waste gases charged with dust and aerosols, consisting of a washing tower with a fibre deep bed filter, characterised in that the waste gas supply line (13) is positioned together with a liquid spraying element (11) tangentially onto a central portion (3) of the washing tower (1), a fibre deep bed filter (4) having a pore width of > 3 µm equipped with a liquid spraying element (12) and adjacent thereto a fibre deep bed filter (7) having a pore width of < 3 µm are arranged above the central portion (3) in the washing tower (1) and a washing liquid collecting cylinder (2) having criticality safe geometry is located beneath the central portion (3).

**Revendication**

Dispositif pour le nettoyage des gaz d'évacuation humides, chargés de poussières et d'aérosols, radioactifs, constitué d'une tour de lavage comportant un filtre à lit profond de fibres, caractérisé en ce que la conduite des gaz d'évacuation (13) est disposée tangentiellement à une partie médiane de la tour de lavage (1) et comporte un élément de pulvérisation du liquide (11) ; en ce qu'au-dessus de la partie médiane (3) sont disposés, dans la tour de lavage, un filtre à lit profond de fibres (7) d'une dimension de pores > 3 microns ; et, à la suite, un filtre à lit profond de fibres (7) d'une dimension de pores de < 3 microns ; et en ce qu'en dessous de la partie médiane (3) se trouve un cylindre de collecte du liquide de lavage (2) présentant une géométrie sûre au point de vue criticité.

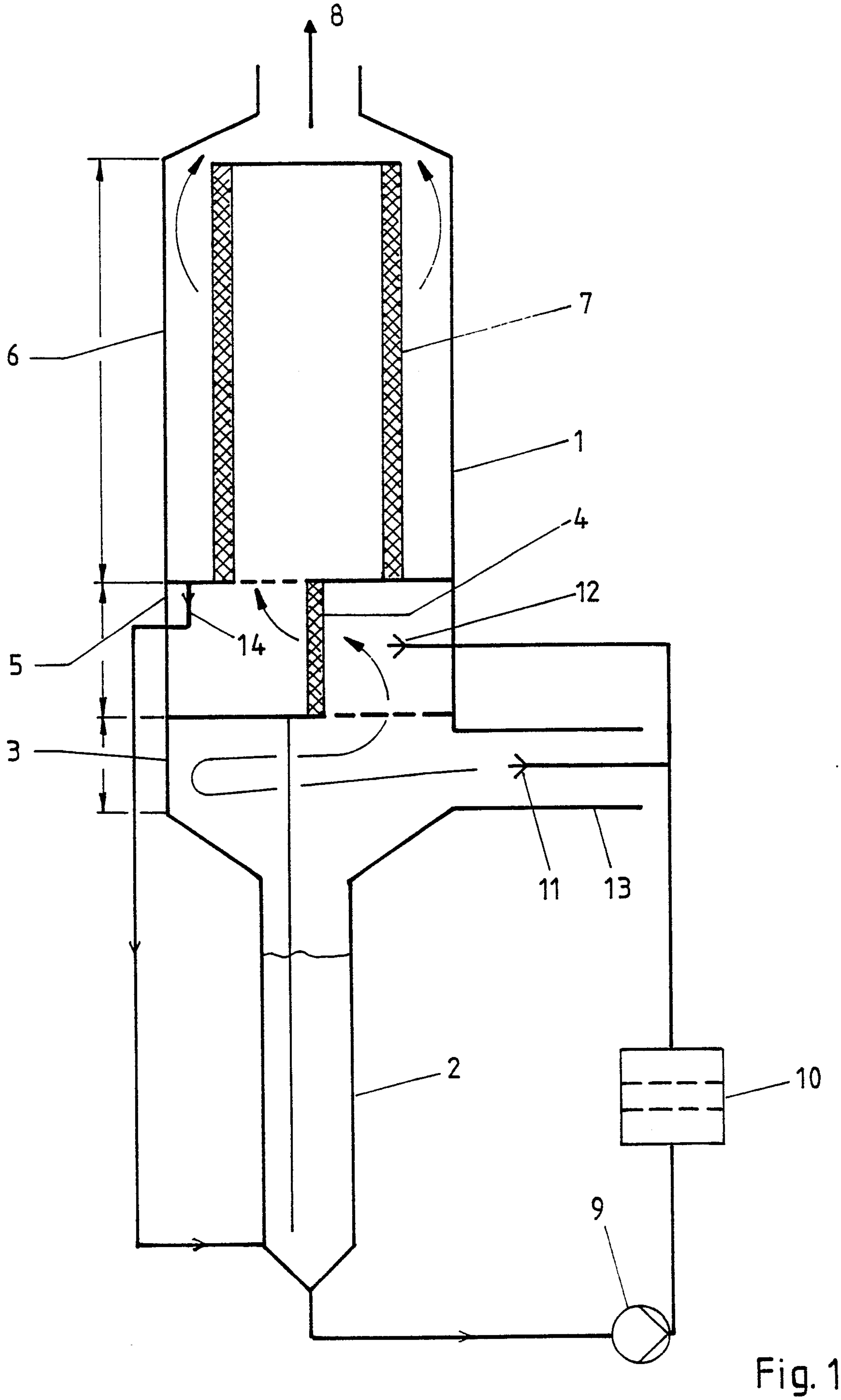


Fig. 1

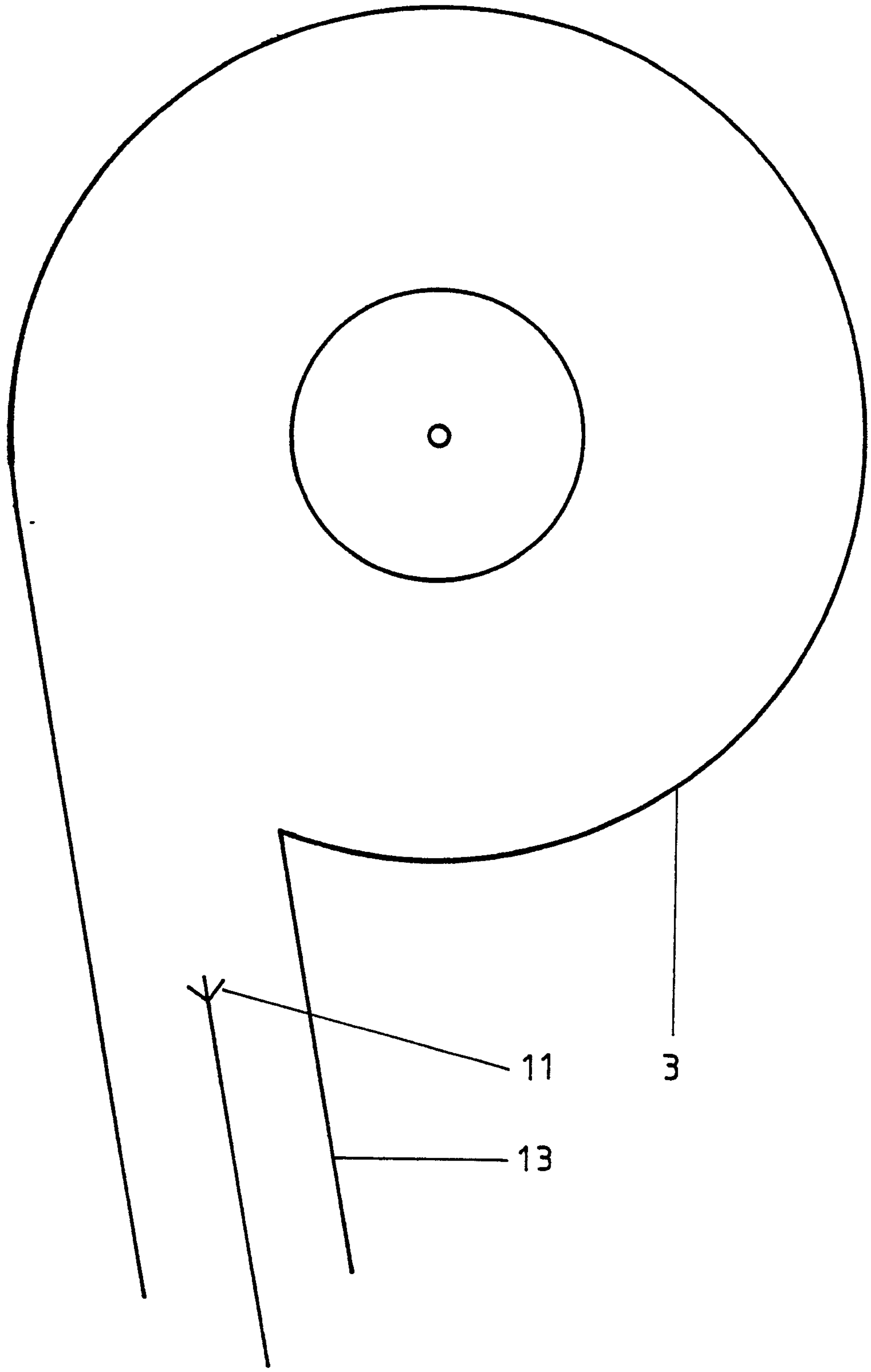


Fig. 2